# EUROPÄISCHE PATENTSCHRIFT

(11) **EP 3 143 680 B1**
(45) Veröffentlichungstag und Bekanntmachung des Hinweises auf die Patenterteilung: **30.09.2020**
(21) Anmeldenummer: 15720639.2
(22) Anmeldetag: 22.04.2015
(51) Int. Cl.: H02K 1/28

(54) **ROTORWELLE MIT BLECHPAKET**
ROTOR SHAFT WITH A LAMINATED CORE
ARBRE DE ROTOR À EMPILAGE DE TÔLES

(30) Priorität: 12.05.2014 DE 102014106614
(43) Veröffentlichungstag der Anmeldung: 22.03.2017
(73) Patentinhaber: ThyssenKrupp Presta TecCenter AG, 9492 Eschen (LI)
(72) Erfinder: PAUL, Daniel, 09235 Burkhardtsdorf (DE); MEUSEL, Jürgen, 09573 Dittmannsdorf (DE); HAMEYER, Kay, 3001 Heverlee (BE); HEROLD, Thomas, 52064 Aachen (DE); ANDREJ, Teofil-Cristian, 52056 Aachen (DE)
(74) Vertreter: thyssenkrupp Intellectual Property GmbH
(86) Internationale Anmeldenummer: PCT/EP2015/058682
(87) Internationale Veröffentlichungsnummer: WO 2015/172986

(56) Entgegenhaltungen:
- EP-A2- 1 530 278
- JP-A- S5 752 335
- US-A- 3 204 134
- US-A- 4 377 762
- US-A1- 2007 096 589

## Beschreibung

Die Erfindung betrifft ein Verfahren zur Montage von Blechen auf der Welle eines Rotors für eine elektrische Maschine, wobei die Bleche auf der Welle gleitend aufgeschoben und zwischen zwei mit der Welle drehfest verbundenen Druckscheiben eingespannt werden. Die Erfindung betrifft auch einen Rotor mit einer solchen Welle und eine damit ausgestattete elektrische Maschine, insbesondere einen Asynchronmotor oder eine permanent erregte Synchronmaschine.

### STAND DER TECHNIK

Aus dem Stand der Technik ist eine Vielzahl solcher Rotoren mit darauf angeordneten Blechen, die meist zu mehr oder weniger umfangreichen Paketen stanzpaketiert sind, bekannt. Diese Rotoren werden beispielsweise in Asynchronmaschinen und in permanent erregten Synchronmaschinen eingesetzt. Zur Herstellung einer zuverlässigen, das Drehmoment übertragenden Verbindung zwischen den Blechpaketen und der Welle werden bei den aus dem Stand der Technik bekannten Rotoren oft zusätzliche Elemente, wie axiale Zuganker, Formschlussmittel oder andere Hilfsmittel, wie Klebstoff, eingesetzt.

Es sind auch Fügetechniken bekannt, bei denen das Blechpaket in Presspassung auf der Welle gehalten wird. So ist es bekannt, die Blechpakete thermisch aufzuschrumpfen, wobei die Welle gekühlt und das Blechpaket entsprechend erhitzt wird. Dieses thermische Fügen ist jedoch umständlich und mit einem großen Energie- und Zeitaufwand verbunden. Zudem ergeben sich Probleme mit Kondensat, das sich wegen der Temperaturunterschiede im Fügebereich bilden kann. Weiterhin sind Fügeverfahren bekannt, bei denen die Blechpakete rein mechanisch auf die Welle gepresst werden. Die Druckbeaufschlagung setzt jedoch eine große Stabilität des Blechpaketes voraus, die bei rein stanzpaketierten Blechpaketen nicht gegeben ist. Stattdessen kommen bei dieser Art der mechanisch gefügten Presspassung Blechpakete zum Einsatz, die mit Einsatz von Backlack paketiert sind und somit ein stabiles Konstrukt bilden. Bei solchen Paketen wird die mechanische Fügung zusätzlich durch die klebenden Eigenschaften des Backlackes unterstützt.

Weiterhin ist beispielsweise aus der DE 10 2007 039 186 ein Rotor bekannt, bei dem das auf ein Trägerelement geschobene Blechpaket zwischen stirnseitig angeordneten Druckringen angeordnet ist, wobei die Druckringe über verschraubte Zuganker gegeneinander verspannt und auf die Welle aufgeschrumpft oder mit der Welle über eine andere Form von Welle-Nabe-Verbindung drehfest verbunden sind. In diesem Fall ist ein hoher Fertigungsaufwand nötig, um die Verbindung der Druckringe auf der Welle einerseits und deren gegenseitige Verspannung andererseits korrekt herzustellen.

Aus der DE 1950 586 sind aufwendig konzipierte Rotoren offenbart, bei denen das Blechpaket fest zwischen zwei auf der Welle aufgeschraubten Muttern verspannt ist. Durch die Verspannung des Blechpakets gegenüber der Welle wird eine hohe Biegesteifigkeit des Rotors erzeugt. Um eine Wärmeausdehnung des Blechpakets zu kompensieren, sind zusätzliche Federelemente beschrieben, die zwischen dem Blechpaket und den Muttern angeordnet sind. Ein ähnlich konzipierter Rotor ist aus der JP 2005184957 bekannt, wobei in diesem Fall axiale Nuten in der Welle vorgesehen sind, in denen da Blechpaket mit entsprechenden Vorsprüngen einliegt.

Es sind beispielsweise aus der DE 10 2011 012 429 auch kraftschlüssige Presssitze von Blechpaketen auf einer in diesem Fall hohlen Welle bekannt. Diese haben den Nachteil, dass die elektromagnetische Wirkungsweise der Bleche am Fügedurchmesser beschädigt wird. Zudem beeinträchtigen Spannungen, die bei den im Pressverband gefügten Verbindungen am Innendurchmesser des Blechpaketes wirken, die Materialeigenschaften und damit die Funktion des Elektrobleches.

Ganz generell ist bei der Konzeption von Rotoren für Synchronmaschinen zu beachten, dass aus sprödem Material bestehende Permanentmagnete, die im Blechpaket eingegraben sind, bei Spannungen im Pressverband Schaden nehmen können.

Eine Rotor- und Wellenanordnung bzw. ein Verfahren zur Montage von Blechen auf einer Welle ist beispielsweise aus der US 3204134, US 2007/0096589 A1, EP 1430278 A2 und JP S57 52335 bekannt geworden.

Die US 3204134 offenbart ein Verfahren zur Montage von Blechen auf einer Welle eines für eine elektrische Maschine vorgesehenen Rotors, wobei die Bleche auf der Welle gleitend aufgeschoben und zwischen zwei mit der Welle drehfest verbundenen Druckscheiben eingespannt werden, wobei die Bleche auf die Welle aufgeschoben werden und gegen einen Anschlag anliegen, der von einer in einem ersten Teilabschnitt der Welle angeordneten ersten Druckscheibe gebildet wird, und wobei die zweite Druckscheibe unter axialer Verspannung der Bleche auf einem zweiten axialen Teilabschnitt der Welle kraftformschlüssig aufgepresst wird, nachdem die Oberfläche des zweiten axialen Teilabschnitts zuvor durch Einbringung eines Außenoberflächenprofils aufgeweitet wurde.

Eine Rotoranordnung für eine elektrische Maschine ist ferner aus der US 2007/0096589A1 bekannt geworden. Die Rotoranordnung umfasst einen Schleifringendventilator und einen Ring angrenzend an den Schleifringendventilator, wobei der Ring an die Wellenkontakte mit dem Schleifringendventilator angepresst ist und eine Klemmkraft auf den Schleifringendventilator ausübt.

Die EP 1430278 A2 beschreibt einen Rotor für eine elektrische Maschine, wobei der Rotor eine Rotorwelle und eine Vielzahl von Rotorblechen umfasst, wobei die Rotorbleche zwischen der ersten und zweiten Endplatte positioniert sind. Es sind elastische Kompressionsmittel zur Kompensation von Wärmeausdehnung und - kontraktion vorgesehen, um die auf die Rotorbleche einwirkende Druckkraft in einem vorbestimmten Kraftbereich über einen Betriebstemperaturbereich des Rotors zu kompensieren.

Aus der JP S57 52335 ist ein Verfahren zur Montage von Blechen auf einer Welle bekannt geworden, bei dem ein Blechpaket von einer Seite auf eine Welle geschoben wird. Dort ist eine mittels Durchmesservergrößerung der Welle gebildete Stufe als Anschlag für die Rotorbleche vorgesehen. Bei dem Verfahren gemäß JP S57 52335 sind zwei Teilabschnitte vorgesehen in denen der Außendurchmesser vergrößert ist.

Wenngleich hier Rotor- und Wellenanordnungen bzw. Verfahren zur Montage von Blechen auf einer Welle vorgeschlagen werden, so besteht dennoch Anlass zur Verbesserung.

### DIE ERFINDUNG

Aufgabe der vorliegenden Erfindung ist es nunmehr, ein Verfahren zur Montage von Blechen auf der Welle eines Rotors zu schaffen, das sich mit einfachen technischen Mitteln umsetzen lässt und das eine kostengünstige und schonende Fertigung von Rotoren ermöglicht. Zudem ist es Aufgabe der Erfindung, einen kostengünstig zu fertigenden, stabilen aber dennoch leichten Rotor zu schaffen, der großen Belastungen ausgesetzt werden kann und insbesondere hohe Drehmomente überträgt.

Diese Aufgaben werden durch das Verfahren nach Anspruch 1, den Rotor nach Anspruch 6 und die elektrische Maschine gemäß Anspruch 8 gelöst. Vorteilhafte Ausführungsformen des sind in den jeweiligen Unteransprüchen beschrieben.

Entsprechend der Ansprüche liegt der wesentliche Aspekt der Erfindung darin, das mit Spiel auf die Welle aufgesetzte Blechpaket des Rotors ausschließlich über eine axiale Pressung zwischen zwei auf der Welle aufsitzenden Druckscheiben kraftschlüssig zu halten, wobei zumindest die eine anpressende zweite Druckscheibe selber vermittels einer kraft-formschlüssigen Fügeverbindung auf einem durch Bearbeitung aufgeweiteten Teilabschnitt der Welle gehalten wird.

Erfindungsgemäß werden die einzelnen Bleche respektive die zu mehr oder weniger umfangreichen Blechpakete paketierten Bleche zunächst mit radialem Spiel kraftfrei auf die Welle aufgefädelt und zentriert gegen einen Anschlag angelegt. Das aufgesetzte Blechpaket wird dann vermittels der ebenfalls auf die Welle aufgeschobenen Druckscheibe in axialer Richtung derart verpresst, dass es - abgesehen von einer eventuellen Zentrierung durch teilweise formschlüssig eingreifende Zentrierhilfen - rein durch Kraftschluss präzise und dauerhaft zwischen Anschlag und Druckscheibe fixiert ist. Die Montage der das Paket in axialer Richtung verspannenden Druckscheibe geschieht erfindungsgemäß durch das kraftformschlüssige Aufpressen dieser Druckscheibe auf den aufgeweiteten Teilabschnitt der insbesondere aus einem Stahl gefertigten Welle. Mit dieser Verspannung können für den Kraftschluss ausreichend große Spann- und Haltekräfte auf das Blechpaket erzeugt werden.

Das Aufweiten der Welle in dem oder den Teilabschnitt(en) geschieht vorteilhafterweise durch ein Rändeln in der Art eines Rollierens und/oder eines Walzens, mit dem Material auf der Oberfläche der Welle verdrängt wird, so dass axial oder tangential verlaufende Materialaufweitungen oder sonstige Strukturen auf der Oberfläche entstehen. In einer zu bevorzugenden Ausführungsform wird in die Oberfläche der Welle ein Gewinde mit Null-Steigung (Rollierung), mithin eine Abfolge den Umfang umfassender Wülste, rolliert, auf das die Druckscheiben mit einer in der Mittelbohrung vorgesehenen geringen Innenverzahnung aufgepresst werden. Verfahren zur Aufweitung der Oberfläche sind beispielsweise aus der DE 41 21 951 oder der DE 10 2009 057 633 bekannt, wobei das in diesen Dokumenten beschriebene Verfahren zum Aufpressen von Steuernocken auf Nockenwellen eingesetzt wird. Dem Fachmann ist das Verfahren auch als Presta®-Verfahren bekannt.

Erfindungsgemäß werden die Bleche, insbesondere in Form vorgefertigter stanzpaketierter Blechpakete, auf die Welle aufgeschoben und liegen dann gegen einen in einem ersten Teilabschnitt der Welle schon montierten Anschlag flächig an, wobei der Anschlag von einer ersten ringförmigen Druckscheibe gebildet wird. Nach dem Auffädeln der Bleche, respektive dem Aufschieben der Blechpakete, wird die zweite Druckscheibe unter starker axialer Verspannung des im gewissen Maße kompressiblen Blechstapels mit definierter Kraft auf den zweiten axialen Teilabschnitt der Welle kraftformschlüssig aufgepresst, nachdem die Oberfläche des zweiten axialen Teilabschnittes, auf dem die zweite Druckscheibe zu liegen kommt, zuvor durch Einbringung des Außenoberflächenprofils aufgeweitet wurde.

Da das erfindungsgemäße Verfahren mit einer geringen Zahl von Bauteilen und Montageschritten auskommt, können Rotoren für elektrische Maschinen besonders einfach und kostengünstig in großer Anzahl hergestellt werden. Dabei können durch das mit definierter Kraft durchgeführte Aufpressen ausreichend hohe Kräfte für den Kraft- respektive Reibschluss zwischen dem Blechpaket und den fest auf der Welle aufgepressten Druckscheiben erzeugt werden, dass ein großes Drehmoment vom Stator über das zwischen den Druckscheiben eingespannte Blechpaket auf die Rotorwelle übertragen werden kann. Zudem sind die pressenden Kräfte so gezielt und schonend einsetzbar, dass keine Veränderung der Geometrie des Rotors und keine Beeinträchtigung von in das Blechpaket eingegrabenen Magneten zu befürchten ist. Auch führt die Verspannung des Blechpaketes zwischen den Druckscheiben zu einem Zug auf die Welle, so dass sich die Steifigkeit des gesamten Rotors erhöht.

Bei dem erfindungsgemäßen Verfahren wird die Federkraft der verdichteten Blechpakete als ohnehin vorhandene Eigenschaft zur Befestigung genutzt. Mit der Verdichtung ergeben sich zudem verbesserte elektromagnetischen Eigenschaften, da keine "ungenutzten" Luftschichten zwischen den Blechen verbleiben.

Zudem ist vorteilhaft, dass sich das ganze Verfahren bei Zimmertemperatur durchführen lässt und bei der Erzeugung der Presssitze nicht auf die erheblichen Temperaturunterschiede angewiesen ist. Dabei lässt sich das Verfahren für die Fertigung jeglicher Rotoren einsetzen, die mit Blechen bestückte Wellen haben. Dabei spielt es keine Rolle, ob die Wellen hohl oder massiv sind. Es muss lediglich die Möglichkeit bestehen, dass die Oberfläche der Wellen mit dem beschriebenen Verfahren an den beiden die Druckscheiben tragenden Teilabschnitten um das notwendige Maß aufgeweitet werden kann.

Erfindungsgemäß ist es zunächst unerheblich, wie die erste den Anschlag bildende Druckscheibe geformt ist. Eine Scheibenform ist nicht unbedingt notwendig, solange die Form und die Befestigung die Funktion eines Anschlags erfüllt. In einer besonders vorteilhaften weil einfach zu fertigenden Ausführungsform ist jedoch auch die erste Druckscheibe auf den entsprechend ersten axialen Teilabschnitt der Welle kraftformschlüssig aufgepresst. Insofern gleicht die Montage der ersten Druckscheibe der der zweiten Druckscheibe. So wird für das Aufpressen der ersten Druckscheibe in einem ersten Verfahrensschritt entsprechend die Oberfläche am ersten axialen Teilabschnitt der Welle und mithin deren Radius durch Einbringung eines Außenoberflächenprofils aufgeweitet.

### Vorteilhafterweise bedient sich das Verfahren folgender Schrittfolge:

Zunächst werden an beiden Teilabschnitten der Welle die Außenoberflächenprofile aufgeweitet. Dabei spielt es keine Rolle, ob es sich um eine Hohlwelle oder eine massive Welle handelt. Bei der Hohlwelle kann es vorteilhaft sein, wenn in die stirnseitigen Öffnungen Endflansche eingepresst sind, die der Hohlwelle in den Außen liegenden Teilabschnitten für das Rollieren entsprechende Stabilität geben. Auf die so vormontierte Welle wird im ersten rollierten Teilabschnitt die erste, den Anschlag bildende Druckscheibe aufgepresst. Dabei kann die Welle mit der Stirnseite des Flansches auf einer Montagehilfsplatte aufliegen, so dass die Welle senkrecht nach Oben gerichtet ist. Dann wird die Druckscheibe aufgefädelt und an die Rollierung angelegt, bevor ein Montagewerkzeug die Druckplatte unter hohem Druck auf den ersten Teilabschnitt aufpresst. Nun ist die erste Druckplatte montiert.

Nachfolgend werden die Bleche auf die Welle kraftfrei über den rollierten zweiten Teilabschnitt hinweg aufgefädelt und liegen gegen die erste Druckscheibe an. Dann wird die zweite Druckscheibe aufgefädelt und an die Rollierung des zweiten Teilabschnitt angelegt. Mit dem nachfolgend aufgesetzten Montagewerkzeug wird die zweite Druckscheibe mit hohem Druck auf dem zweiten Teilabschnitt verpresst und legt sich dabei an die Stirnfläche des Blechpakets. Der Druck wird ohne Unterbrechung des Setzvorganges fortgesetzt, so dass das Blechpaket mit einer definierten Montagekraft verdichtet wird. Das Aufpressen der zweiten Druckscheibe auf die Welle erfolgt somit unter Verspannung der Bleche.

In den Fällen, in denen das Paket der Bleche nicht selber über eine ausreichende axiale Kompressibilität verfügt, um die für den Kraftschluss erforderlichen Federkräfte aufzubauen, ist es vorteilhaft, ein zusätzliches Federelement vorzusehen, das ebenfalls auf die Welle aufgefädelt und dann zwischen den beiden Druckscheiben zusammen mit den Blechen verspannt wird. Das Federelement kann von einer Tellerfeder aus Stahl oder einem kompressiblen Pufferelement gebildet werden. Der Einsatz des Federelementes hat den weiteren Vorteil, dass es dazu beiträgt, eine temperaturbedingte Ausdehnung des Blechpaketes zu kompensieren und die federnde Kraft, die zum Kraftschluss erforderlich ist, bei allen Bedingungen aufrecht zu erhalten.

Das Verfahren weist eine große "Toleranz" gegenüber den bei Blechpaketen üblichen Axialtoleranzen auf, wenn die zweite Druckscheibe kraftgesteuert und nicht weggesteuert gesetzt wird und die Rollierung "extra breit" ausgeführt wird.

### BEVORZUGTE AUSFÜHRUNGSBEISPIELE DER ERFINDUNG

Besondere Ausführungsformen des erfindungsgemäßen Rotors werden nachfolgend anhand der Figuren näher erläutert. Dabei zeigen:
- **Figur 1**: die vier Phasen der Fertigung,
- **Figur 2**: ein Ausschnitt der Hohlwelle mit aufgepresstem Blechpaket,
- **Figur 3**: ein dreiteiliger Rotor mit Hohlwelle und aufgepresstem Blechpaket und
- **Figur 4**: ein fixiertes Blechpaket mit Tellerfeder.

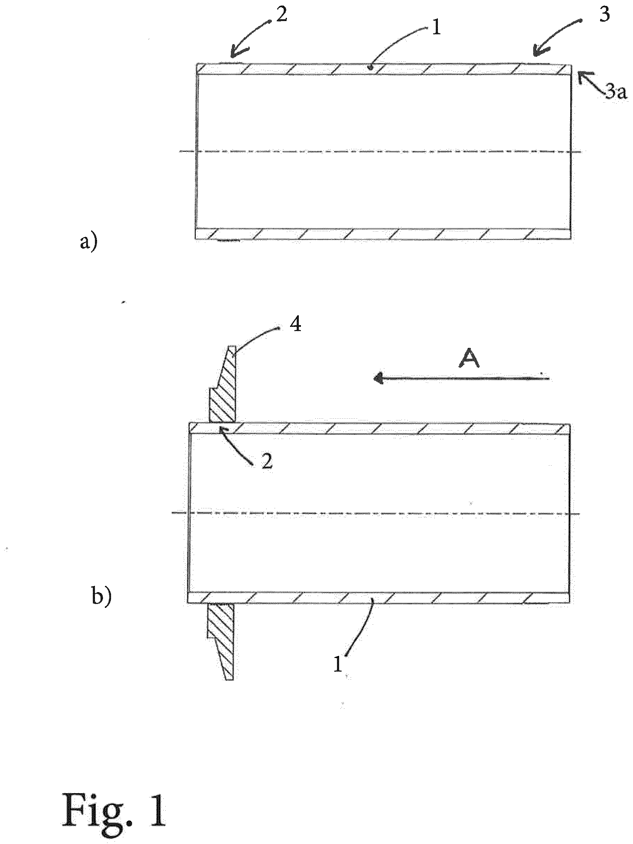

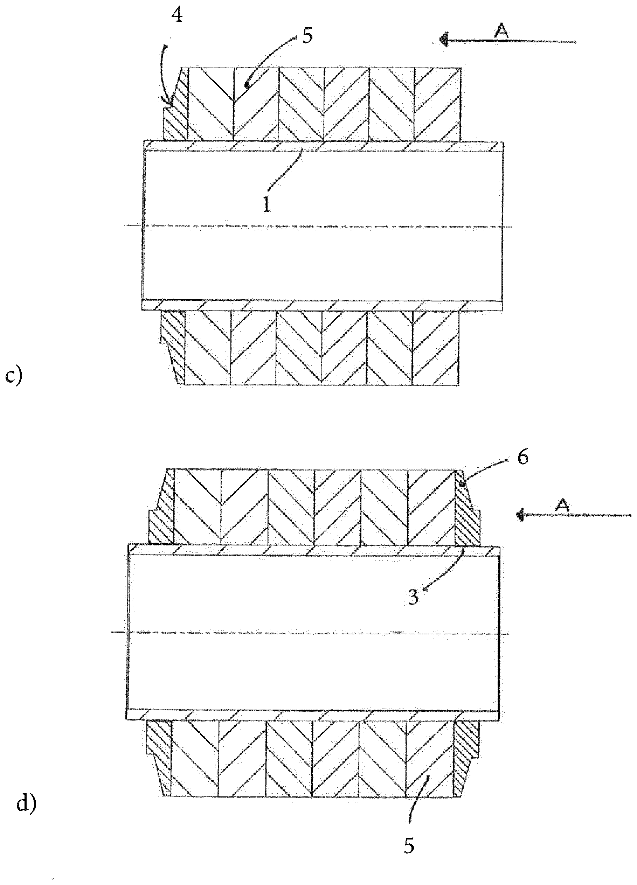

In Figur 1 sind zunächst vier Verfahrensschritte a) bis d) zur Montage von Blechen auf einer Hohlwelle 1 eines für eine elektrische Maschine vorgesehenen Rotors. Zunächst wird in einem ersten Schritt nach Figur 1a die Oberfläche der Hohlwelle 1 an einem ersten Teilabschnitt 2 und einem zweiten Teilabschnitt 3 durch Rollieren eines Außenoberflächenprofils, in diesem Fall eines Gewindes mit Null-Steigung, aufgeweitet.

Die Aufweitungen können nach ihrer Herstellung auf Endmaß geschliffen sein. Auf die so vormontierte Hohlwelle 1 wird im nachfolgenden Schritt 1b eine den Anschlag bildende Druckscheibe 4 in Richtung des Pfeils A über geschoben, an die Rollierung angelegt und mit einem Montagewerkzeug auf den rollierten ersten Teilabschnitt 2 aufgepresst. Dabei kann die Wandung der in die Druckscheibe 4 eingebrachten Bohrung ebenfalls mit einer Art Gewinde, das eine geringere Tiefe als das Außenoberflächenprofil in Teilabschnitt 2 hat, aufgerauht sein. Die solchermaßen innengeräumte Druckscheibe 4 sitzt in kraft-formschlüssiger Presspassung auf der Hohlwelle 1 auf.

In Schritt 1c werden die Bleche in zuvor stanzpaketierten Blechpaketen 5 auf die Hohlwelle 1 kraftfrei über den rollierten zweiten Teilabschnitt 3 hinweg in Pfeilrichtung A aufgefädelt, bis sie gegen die erste Druckscheibe 4, die einen Anschlag bildet, anliegen. Damit das Auffädeln des Blechpaketes 5 über den Teilabschnitt 3 hinweg gelingen kann, ist die als zentrale Bohrung ausgebildete Aufnahmeöffnung im Blechpaket 5 von größerem Durchmesser als der zweite Teilabschnitt 3, so dass im zweiten Teilabschnitt 3 zwischen der Hohlwelle 1 und dem Blechpaket 5 ein geringer Spalt verbleibt.

In Schritt 1d wird nun zunächst die zweite Druckscheibe 6 auf die Hohlwelle 1 gegen den Teilabschnitt 3 angelegt und mit einem nicht dargestellten Montagewerkzeug in Pfeilrichtung A mit hohem Druck auf dem zweiten Teilabschnitt 3 aufgepresst, wobei sie sich unter Ausübung einer axialen Spannkraft an die Stirnfläche des Blechpakets 5 anlegt. Der Druck in Pfeilrichtung wird fortgesetzt und verdichtet das Blechpaket mit definierter Montagekraft. Mit dem Aufpressen der zweiten Druckscheibe 6 wird das Blechpaket 5 somit axial verspannt. Somit ist das Blechpaket 5 gleitend auf der Hohlwelle 1 aufgeschoben und zwischen den beiden mit der Hohlwelle 1 drehfest verbundenen Druckscheiben 4 und 6 eingespannt. Das Drehmoment wird vom Blechpaket 5 über die Druckscheiben 4 und 6 auf die Hohlwelle 1 übertragen.

Um die Montage aus einer Richtung (Pfeil A) zu ermöglichen, hat die Hohlwelle 1 im ersten Teilabschnitt 2 - wie erwähnt - einen etwas größeren Außendurchmesser als im zweiten Teilabschnitt 3, wobei der kleinere Durchmesser sich bis an das entsprechende Ende 3a der Hohlwelle 1 erstreckt. Der Außendurchmesser des zweiten Teilabschnittes 3 ist kleiner als der Durchmesser der zentralen Bohrung der ersten Druckscheibe 4, so dass diese problemlos über den zweiten Teilabschnitt 3 hinweg aufgefädelt werden kann. Der zentrale Bohrung der zweiten Druckscheibe 6 ist dem aufgeweiteten kleineren Durchmesser des zweiten Teilabschnittes 3 angepasst und kann auf diesem verpresst werden.

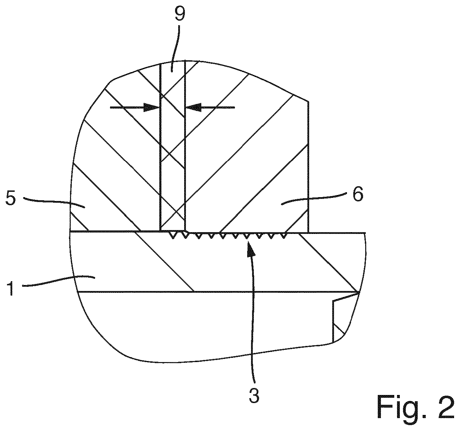

Figur 2 zeigt einen Ausschnitt des zweiten Teilabschnittes 3 bei auf die Hohlwelle 1 aufgepresstem zweiter Druckscheibe 6. Zwischen dem Blechpaket 5 und der Druckscheibe 6 ist eine Toleranz der Blechpaketlänge und damit ein Bereich 9 dargestellt, in dem sich der Stapel der Blechpakete durch das Aufpressen der Druckscheibe 6 komprimieren lässt. In diesem Bereich kann das Blechpaket 5 die Durchmesseraufweitung im zweiten Teilbereich überragen.

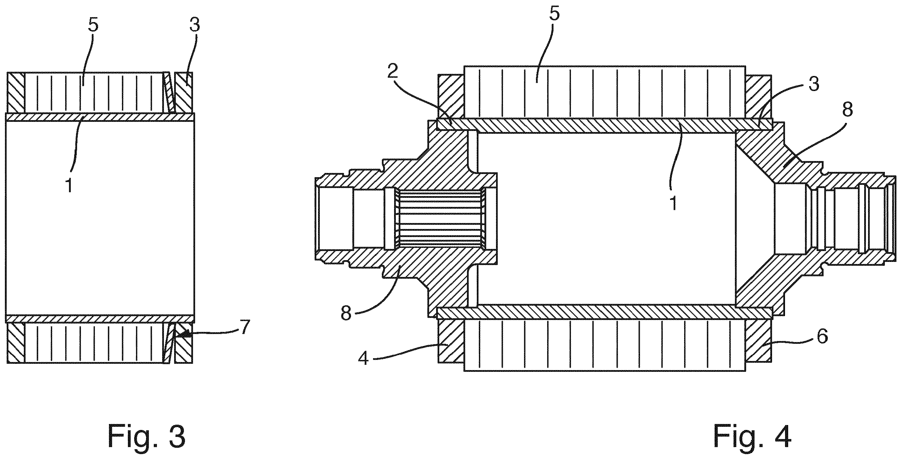

In Figur 3 ist ein solches auf eine Hohlwelle 1 aufgeschobenes Blechpaket 5 gezeigt, wobei zwischen der Stirnseite des Blechpakets 5 und der zweiten Druckscheibe 3 eine Tellerfeder 7 angeordnet ist. Diese Tellerfeder 7 unterstützt in diesem Fall die für den Kraftschluss erforderliche Kompressibilität, um die ausreichende axiale Verspannung des Blechpaketes zu gewährleisten.

In Figur 4 ist nunmehr ein Rotor für eine elektrische Maschine gezeigt, der nach dem beschriebenen Verfahren hergestellt ist. Zu erkennen ist die Hohlwelle 1, deren Durchmesser in zwei axial beabstandeten Teilabschnitten 2 und 3 jeweils einen durch Rollieren aufgeweiteten Durchmesser aufweist. Auf jeden der Teilabschnitte 2 und 3 sind Druckscheiben 4 und 6 kraftformschlüssig aufgepresst, die das mit Spiel aufgeschobene Blechpaket rotationsfest verspannen. In die stirnseitigen Öffnungen der Hohlwelle 1 sind vor dem Aufpressen der Druckscheiben 4 und 6 jeweils Endflansche 8 eingepresst, die eine Abtriebswelle aufnehmen. Die Endflansche 8 unterstützen die Wandung der Hohlwelle 1 dort, wo die Druckscheiben 4 und 6 aufgepresst sind.

### Bezugszeichenliste

- 1: Hohlwelle
- 2: erster Teilabschnitt
- 3: zweiter Teilabschnitt
- 3a: Ende der Hohlwelle
- 4: erste den Anschlag bildende Druckscheibe
- 5: Blechpaket
- 6: zweite Druckscheibe
- 7: Tellerfeder
- 8: Flansch
- 9: Toleranzbereich

## Patentansprüche

1. Verfahren zur Montage von Blechen (5) auf einer Welle (1) eines für eine elektrische Maschine vorgesehenen Rotors, wobei die Bleche (5) auf der Welle (1), welche in einem ersten Teilabschnitt (2) einen größeren Außendurchmesser aufweist, als in einem zweiten axialen Teilabschnitt (3), gleitend aufgeschoben und zwischen zwei mit der Welle (1) drehfest verbundenen Druckscheiben (4,6) eingespannt werden,
wobei die Bleche (5) auf die Welle (1) aufgeschoben werden und gegen einen Anschlag (4) anliegen, der von einer in dem ersten Teilabschnitt (2) der Welle (1) angeordneten ersten Druckscheibe (4) gebildet wird, wobei der Außendurchmesser des zweiten Teilabschnittes (3) derart kleiner als der Durchmesser einer zentralen Bohrung der ersten Druckscheibe (4) ist, dass die erste Druckscheibe (4) über den zweiten Teilabschnitt (3) hinweg aufgefädelt wird,
und wobei die zweite Druckscheibe (6) unter axialer Verspannung der Bleche (5) auf den zweiten axialen Teilabschnitt (3) der Welle (1) kraftformschlüssig aufgepresst wird, nachdem die Oberfläche des zweiten axialen Teilabschnittes (3) zuvor durch Einbringung eines Außenoberflächenprofils aufgeweitet wurde.

2. Verfahren nach Anspruch 1,
**dadurch gekennzeichnet,**
**dass** auch die erste Druckscheibe (4) auf den ersten axialen Teilabschnitt (2) der Welle (1) kraftformschlüssig aufgepresst wird, nachdem die Oberfläche des ersten axialen Teilabschnittes (2) der Welle (1) zuvor in einem ersten Schritt durch Einbringung eines Außenoberflächenprofils aufgeweitet wurde.

3. Verfahren nach Anspruch 1 oder 2,
**dadurch gekennzeichnet,**
**dass** die Bleche zu einem oder mehreren stanzpaketierten Blechpaketen zusammengefasst werden.

4. Verfahren nach einem der vorherigen Ansprüche,
**gekennzeichnet durch**
die Schrittfolge:
Aufweiten des Außenoberflächenprofils im ersten und im zweiten Teilabschnitt der Welle,
Aufpressen der ersten Druckscheibe auf die Welle,
kraftfreies Auffädeln der Bleche auf die Welle und Anlage gegen die erste Druckscheibe und
Aufpressen der zweiten Druckscheibe auf die Welle unter Verspannung der Bleche.

5. Verfahren nach einem der vorherigen Ansprüche,
**dadurch gekennzeichnet,**
**dass** mit den Blechen oder dem Blechpaket (5) ein Federelement (7) aufgeschoben wird, das zusammen mit den Blechen oder dem Blechpaket (5) zwischen den beiden Druckscheiben (4,6) verspannt wird.

6. Rotor für eine elektrische Maschine hergestellt nach einem Verfahren der vorherigen Ansprüche,
**gekennzeichnet durch**
eine Welle (1), deren Durchmesser in zwei axial beabstandeten Teilabschnitten (2,3) jeweils einen aufgeweiteten Durchmesser, insbesondere mit den Umfang umfassenden Materialaufweitungen, aufweist, wobei auf jeden der Teilabschnitte (2,3) eine Druckscheibe (4,6) kraftformschlüssig aufgepresst ist und wobei zwischen den Druckscheiben (4,6) die Welle (1) mit Spiel umgebende Bleche (5) rotationsfest verspannt sind, wobei die Welle im ersten Teilabschnitt (2) einen größeren Außendurchmesser als im zweiten Teilabschnitt (3) aufweist, wobei der Außendurchmesser des zweiten Teilabschnittes (3) kleiner als der Durchmesser der zentralen Bohrung der ersten Druckscheibe (4) ist.

7. Rotor nach Anspruch 6,
**dadurch gekennzeichnet,**
**dass** die Welle eine Hohlwelle (1) ist.

8. Elektrische Maschine, insbesondere Asynchronmotor oder permanent erregte Synchronmaschine, mit einem Rotor nach einem der Ansprüche 6 oder 7.

## Claims

1. Method for installing laminations (5) on a shaft (1) of a rotor provided for an electric machine, wherein the laminations (5) are pushed slidingly onto the shaft (1), which has a larger outer diameter in a first subsection (2) than in a second axial subsection (3), and are clamped between two pressure discs (4, 6) which are connected rotationally conjointly to the shaft (1),
wherein the laminations (5) are pushed onto the shaft (1) and come to lie against a stop (4) which is formed by a first pressure disc (4) arranged in the first subsection (2) of the shaft (1), wherein the outer diameter of the second subsection (3) is smaller than the diameter of a central bore of the first pressure disc (4) such that the first pressure disc (4) is threaded on over the second subsection (3),
and wherein the second pressure disc (6) is pressed in force-fitting and form-fitting fashion onto the second axial subsection (3) of the shaft (1), so as to axially clamp the laminations (5), after the surface of the second axial subsection (3) has first been expanded by introduction of an external surface profile.

2. Method according to Claim 1,
**characterized**
**in that** the first pressure disc (4) is also pressed in force-fitting and form-fitting fashion onto the first axial subsection (2) of the shaft (1) after the surface of the first axial subsection (2) of the shaft (1) has first been expanded in a first step by introduction of an external surface profile.

3. Method according to Claim 1 or 2,
**characterized**
**in that** the laminations are combined to form one or more punch-bundled laminated cores.

4. Method according to any of the preceding claims,
**characterized by**
the sequence of steps:
expanding the external surface profile in the first and in the second subsection of the shaft,
pressing the first pressure disc onto the shaft,
threading the laminations in a force-free manner onto the shaft and causing these to abut against the first pressure disc, and
pressing the second pressure disc onto the shaft so as to clamp the laminations.

5. Method according to any of the preceding claims,
**characterized**
**in that**, with the laminations or the laminated core (5), a spring element (7) is pushed on which is clamped together with the laminations or the laminated core (5) between the two pressure discs (4, 6).

6. Rotor for an electric machine produced in accordance with a method of the preceding claims,
**characterized by**
a shaft (1), the diameter of which has in each case an expanded diameter, in particular with expanded material portions encircling the circumference, in two axially spaced-apart subsections (2, 3), wherein a pressure disc (4, 6) is pressed in force-fitting and form-fitting fashion onto each of the subsections (2, 3), and wherein laminations (5) which surround the shaft (1) with play are clamped rotationally conjointly between the pressure discs (4, 6), wherein the shaft has a larger outer diameter in the first subsection (2) than in the second subsection (3), wherein the outer diameter of the second subsection (3) is smaller than the diameter of the central bore of the first pressure disc (4).

7. Rotor according to Claim 6,
**characterized**
**in that** the shaft is a hollow shaft (1).

8. Electric machine, in particular asynchronous motor or permanently excited synchronous machine, having a rotor according to either of Claims 6 and 7.

## Revendications

1. Procédé de montage de tôles (5) sur un arbre (1) d'un rotor destiné à une machine électrique, les tôles (5) étant poussées par coulissement sur l'arbre (1) qui présente sur un premier tronçon (2) un diamètre extérieur supérieur à celui sur un deuxième tronçon axial (3) et serrées entre deux disques de pression (4, 6) reliés à l'arbre (1) de manière solidaire en rotation,
dans lequel les tôles (5) sont poussées sur l'arbre (1) et appuient contre une butée (4) qui est formée par un premier disque de pression (4) disposé sur le premier tronçon (2) de l'arbre (1), dans lequel le diamètre extérieur du deuxième tronçon (3) est inférieur au diamètre d'un alésage central du premier disque de pression (4) de telle sorte que le premier disque de pression (4) est enfilé au-delà du deuxième tronçon (3),
et dans lequel le deuxième disque de pression (6) est pressé par application de force et conjugaison de forme sur le deuxième tronçon axial (3) de l'arbre (1) sous serrage axial des tôles (5) après que la surface du deuxième tronçon axial (3) a été préalablement élargie par l'introduction d'un profil de surface extérieur.

2. Procédé selon la revendication 1, **caractérisé en ce que** le premier disque de pression (4) est également pressé par application de force et conjugaison de forme sur le premier tronçon axial (2) de l'arbre (1) après que la surface du premier tronçon axial (2) de l'arbre (1) a été préalablement élargie dans une première étape par l'introduction d'un profil de surface extérieur.

3. Procédé selon la revendication 1 ou 2, **caractérisé en ce que** les tôles sont regroupées dans un ou plusieurs paquets boutonnés.

4. Procédé selon l'une quelconque des revendications précédentes, **caractérisé par** la séquence d'étapes consistant à :
élargir le profil de surface extérieur sur le premier et le deuxième tronçon de l'arbre,
presser le premier disque de pression sur l'arbre,
enfiler à force nulle les tôles sur l'arbre et les appuyer sur le premier disque de pression, et
presser le deuxième disque de pression sur l'arbre sous serrage des tôles.

5. Procédé selon l'une quelconque des revendications précédentes, **caractérisé en ce qu'**avec les tôles ou le paquet de tôles (5), un élément faisant ressort (7) est poussé en place qui est serré avec les tôles ou le paquet de tôles (5) entre les deux disques de pression (4, 6).

6. Rotor destiné à une machine électrique, fabriqué selon un procédé selon l'une quelconque des revendications précédentes, **caractérisé par** un arbre (1) dont le diamètre présente sur deux tronçons axialement espacés (2, 3) respectivement un diamètre élargi, en particulier avec des élargissements de matière comprenant la circonférence, dans lequel un disque de pression (4, 6) est pressé par application de force et conjugaison de forme sur chacun des tronçons (2, 3), et dans lequel, entre les disques de pression (4, 6), des tôles (5) entourant l'arbre (1) avec du jeu sont serrées de manière solidaire en rotation, l'arbre présentant sur le premier tronçon (2) un diamètre extérieur supérieur à celui sur le deuxième tronçon (3), le diamètre extérieur du deuxième tronçon (3) étant inférieur au diamètre de l'alésage central du premier disque de pression (4).

7. Rotor selon la revendication 6, **caractérisé en ce que** l'arbre est un arbre creux (1).

8. Machine électrique, en particulier moteur asynchrone ou machine synchrone à excitation permanente, comprenant un rotor selon l'une quelconque des revendications 6 et 7.
